# FASCICULE DE BREVET EUROPEEN

(11) **EP 1 128 969 B1**
(45) Date de publication et mention de la délivrance du brevet: **13.08.2003**
(21) Numéro de dépôt: 99949076.6
(22) Date de dépôt: 19.10.1999
(51) Int. Cl.: B44C 1/04, B05D 5/06

(54) **PIECE EN MATIERE PLASTIQUE METALLISEE ET SON PROCEDE DE FABRICATION**
METALLISIERTES PLASTIKTEIL UND SEIN HERSTELLUNGSVERFAHREN
METAL-COATED PLASTIC PART AND METHOD FOR MAKING SAME

(30) Priorité: 17.11.1998 FR 9814421
(43) Date de publication de la demande: 05.09.2001
(73) Titulaire: Crown Cork & Seal Technologies Corporation, Alsip, IL 60803-2599 (US)
(72) Inventeur: MINE, Jean-Didier, F-72290 Souligne-sous-Ballon (FR)
(74) Mandataire: Habasque, Etienne Joel Jean-François
(86) Numéro de dépôt international: FR9902544
(87) Numéro de publication internationale: WO00029227

(56) Documents cités:
- DE-A- 2 210 558
- DE-A- 2 224 549
- DE-A- 2 323 824
- US-A- 4 169 171
- US-A- 4 911 811
- US-A- 5 698 310

## Description

La présente invention concerne la réalisation de pièces en matière plastique métallisées et se rapporte plus particulièrement à la réalisation de pièces de ce type notamment pour les emballages de produits de parfumerie.

L'industrie du luxe et notamment de l'emballage de produits de parfumerie et cosmétiques cherche souvent à obtenir un effet esthétique en créant des emballages ayant une surface d'aspect métallique à travers une épaisseur de matière transparente ou translucide.

Les procédés utilisés pour réaliser des emballages ou éléments d'emballage de ce type comprennent :
- l'assemblage d'une pièce d'aspect métallique et d'une pièce transparente ou translucide, lorsque la géométrie des pièces permet un emboîtement de l'une dans l'autre;
- le surmoulage d'un matériau plastique transparent ou translucide sur un insert d'aspect métallique.

Classiquement, ce damier procédé s'applique sur un insert réalisé en métal moulé ou embouti.

Le document US-A-4 911 811 concerne un revêtement décoratif et protecteur d'articles, fabriqué en quatre couches, à savoir un dépôt métallique obtenu par métallisation sous vide à sec, une couche transparente sur ce dépôt métallique, une couche métallique mince obtenue par métallisation sous vide à sec sur la couche transparente, et une autre couche transparente. Le dépôt métallique est de 100 à 500 Å d'épaisseur. La couche métallique est de 100 à 5000 Å d'épaisseur.

En vue de la réduction des coûts, il est également classique d'utiliser un insert en matière plastique injecté, que l'on a recouvert d'une couche métallique par vaporisation sous vide. Cette métallisation est cependant fragile, et peut être dégradée par la chaleur et la pression générées par l'opération de surmoulage. Une telle fragilité impose des contraintes à la géométrie des pièces réalisées.

Par ailleurs, la phase de métallisation sous vide en phase vapeur de l'insert en matière plastique nécessite que l'insert soit au préalable recouvert d'un vernis d'accrochage du dépôt métallique qui est instable lors de l'opération d'injection de la matière plastique transparente ou translucide sur le revêtement métallique.

L'invention vise à remédier aux inconvénients du procédé mettant en oeuvre la phase de métallisation par dépôt en phase vapeur en créant une pièce en matière plastique métallisée, qui tout en pouvant présenter une géométrie complexe quelconque soit d'un aspect esthétique amélioré.

Elle a donc pour objet une pièce en matière plastique comprenant un insert revêtu d'une couche de métallisation recouverte à son tour d'une matière plastique transparente ou translucide, caractérisée en ce que la couche de métallisation est en contact direct avec l'insert et présente une épaisseur minimum de 15 microns.

L'invention a également pour objet un procédé de fabrication d'une pièce en matière plastique du type défini ci-dessus, consistant à former un insert en matière thermoplastique, à réaliser sur l'insert un dépôt métallique et à recouvrir l'insert métallisé d'une matière thermoplastique transparente ou translucide, caractérisé en ce que le dépôt métallique est réalisé en contact direct avec l'insert.

Selon d'autres caractéristiques de l'invention :
- le dépôt métallique sur l'insert forme une couche d'épaisseur minimum de 15 microns et de préférence égale à 30 microns;
- le dépôt métallique est réalisé par une étape de dépôt sur l'insert d'une couche métallique par voie chimique suivie d'au mois une étape de dépôt par voie électrolytique;
- le métal déposé au cours de l'étape de dépôt par voie chimique est du nickel, du cuivre ou du palladium;
- le métal déposé au cours de ladite au moins une étape de dépôt par voie électrolytique est du cuivre et du nickel;
- le métal déposé au cours d'une étape facultative de dépôt électrolytique est un métal de finition choisi parmi l'or, l'argent, le chrome, le palladium, le bronze blanc;

L'invention a également pour objet une pièce en matière plastique comprenant un insert revêtu d'une couche de métallisation recouverte à son tour d'une matière plastique transparente ou translucide, caractérisée en ce que la couche de métallisation est en contact direct avec l'insert et présente une épaisseur minimum de 15 microns et de préférence égale à 30 microns.

L'invention sera mieux comprise à l'aide de la description qui va suivre, donnée uniquement à titre d'exemple et faite en se référant aux dessins annexés, sur lesquels :
- la Fig.1 est une vue en élévation et en coupe d'un capuchon de flacon obtenu par le procédé suivant l'invention; et
- la Fig.2 est une coupe suivant la ligne 2-2 de la figure 1.

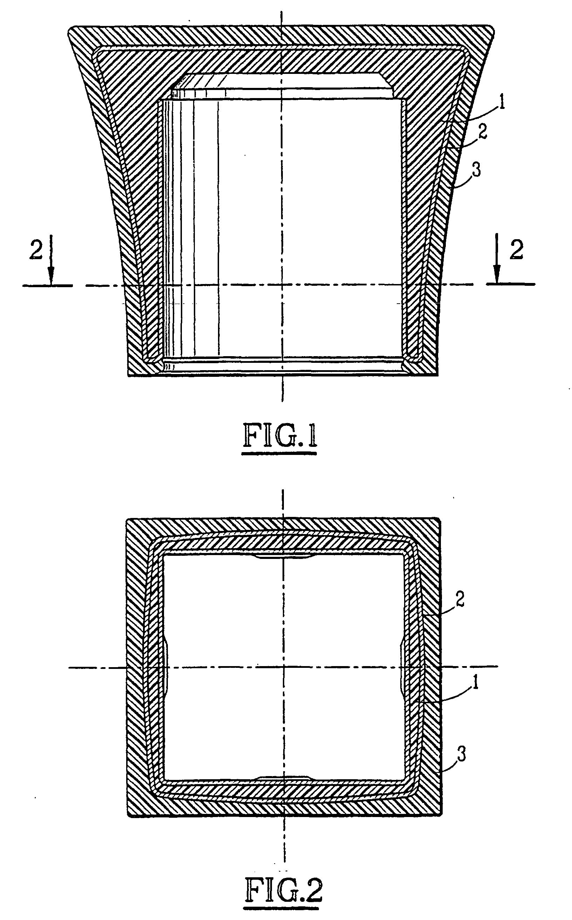

Sur les figures 1 et 2, on a représenté un capuchon métallisé comportant un insert 1 en matière thermoplastique réalisé par un procédé d'injection dans un moule métallique non représenté.

Le grade de polymère utilisé est nécessairement galvanisable. Il s'agit par exemple d'acrylonitrile-butadiène-styrène, ABS, de polypropylène ou de polyamide chargé de talc et/ou de sulfate de baryum.

Ce polymère peut avantageusement être alourdi par une charge minérale pour obtenir, en outre, un effet de poids souhaitable pour donner une impression de luxe.

Cet effet de poids est toutefois facultatif.

L'insert 1 est revêtu d'un dépôt métallique 2.

Ce dépôt métallique est obtenu par galvanoplastie de l'insert 1. A cet effet, l'insert est traité chimiquement et reçoit un premier dépôt de nickel par un procédé de dépôt chimique faisant intervenir un catalyseur sur la matière plastique appelé communément POP "Plating on Plastics", puis il subit un traitement électrolytique qui permet de déposer du nickel électrolytique sur le nickel chimique directement en contact avec la surface de l'insert.

Sur le nickel électrolytique on dépose, toujours par voie électrolytique, du cuivre et du nickel brillant ou satin.

La couche de métal obtenue a une épaisseur minimum de 15 microns et de préférence égale à 30 microns. La moitié au moins de cette épaisseur est constituée de cuivre.

Un procédé électrolytique de dépôt de couches de métallisation est décrit dans la demande de brevet français n° 95 06 717 déposée le 7 juin 1995 par la société AMS EUROPE.

Bien que la couche de métallisation décrite ci-dessus soit obtenue par dépôt initial par un procédé chimique, d'une couche de nickel puis par dépôt électrolytique de nickel et de cuivre ou de nickel brillant, il est également possible de déposer par voie chimique une première couche de cuivre ou de palladium.

La nature et l'ordre des métaux déposés par voie électrolytique peut également varier.

Pour obtenir un rendu de couleur particulier, on peut déposer sur la couche de nickel, par voie électrolytique, une couche de finition d'un métal noble tel que de l'or, de l'argent, du chrome, du palladium, du bronze blanc ou autre, ou un alliage de ces métaux.

L'insert 1 moulé et revêtu de sa couche de métailisation 3 est recouvert d'une matière thermoplastique transparente ou translucide 3.

A cet effet, l'insert 1 revêtu de sa couche de métallisation 2 est placé dans l'empreinte d'un moule métallique non représenté et maintenu fermement dans ce moule par un dispositif mécanique, par exemple, par serrage sur un noyau s'emboîtant dans une partie creuse de la pièce.

L'empreinte du moule est d'un volume supérieur à celui de l'insert de façon à ménager après fermeture du moule, un espace vide dans lequel est injectée une matière thermoplastique transparente ou translucide.

Cette matière est un polymère tel que par exemple du polycarbonate, du styrène-acrylonitrile ou SAN, de l'acétate de cellulose, de l'acéto-propionate de cellulose, du polyméthacrylate de méthyle ou un iononière de marque SURLYN commercialisé par la société Dupont de Nemours.

L'emploi du SURLYN ® est particulièrement avantageux en parfumerie/cosmétique du fait de son haut niveau de transparence et de sa bonne résistance chimique aux agents actifs des parfums et produits cosmétiques.

Pour obtenir des variantes d'effet esthétique, on peut utiliser la matière transparente ou translucide soit dans sa coloration naturelle, soit en mélangeant avec celle-ci avant l'injection, un colorant, pour obtenir une matière toujours transparente, mais teintée.

On peut également disperser dans la matière transparente ou translucide des particules de nacre, de fragments métalliques ou autres pour donner des effets de paillettes et de brillance.

Les pièces présentant un aspect métallique vu au travers d'une épaisseur transparente ainsi réalisées peuvent être utilisées soit comme produits finis, soit comme composants entrant dans la fabrication d'un produit fini, comprenant des opérations d'assemblage et de décor.

Dans l'emballage, le procédé suivant l'invention peut être notamment appliqué pour la réalisation de différents éléments de conditionnement :
- bouchons et capots, à l'exemple de celui présenté aux figures 1 et 2.
- étuis, si la pièce insert comporte un logement creux propre à abriter soit l'objet à conditionner, soit un deuxième contenant.
- flacons ou pots, si la pièce insert comporte un logement creux propre à servir de contenant, et est dotée d'une fonction d'étanchéité.
- éléments purement décoratifs, destinés à être assemblés aux éléments de conditionnement proprement dits.

L'association du revêtement de l'insert en matière thermoplastique par galvanisation et de son surmoulage par une matière thermoplastique transparente ou translucide, présente les avantages suivants :
- réalisation d'un aspect métallisé sous une épaisseur transparente ou translucide, avec un bel effet esthétique,
- possibilité d'utiliser des formes d'insert non assemblables par emboîtement avec une partie extérieure transparente,
- gain économique par rapport à l'utilisation d'un insert réellement métallique.

Mais en plus de cela, elle apporte une résistance accrue de la couche métallique intermédiaire. Grâce à cette résistance, l'insert métallisé est capable de supporter des conditions de surmoulage beaucoup plus sévères. Il est donc possible de réaliser des pièces de formes plus complexes qu'avec les procédés traditionnels.

## Revendications

1. Pièce en matière plastique constituée d'un insert (1) revêtu d'une couche de métallisation (2) recouverte à son tour d'une matière plastique transparente ou translucide (3), la couche (2) de métallisation comportant un premier dépôt chimique de métal se trouvant directement en contact avec la surface de l'insert (1) et au moins un deuxième dépôt électrolytique de métal se trouvant sur ledit premier dépôt de métal et la couche (2) de métallisation possédant une épaisseur totale minimum de 15 micromètres.

2. Pièce en matière plastique suivant la revendication 1, **caractérisée en ce que** la couche de métallisation (2) a une épaisseur de 30 micromètres.

3. Pièce en matière plastique suivant l'une des revendications 1 et 2, **caractérisée en ce que** la couche de métallisation comporte du nickel et du cuivre.

4. Pièce en matière plastique suivant la revendication 3, **caractérisée en ce que** l'épaisseur de cuivre de la couche de métallisation est égale à au moins la moitié de l'épaisseur de la couche de métallisation.

5. Procédé de fabrication d'une pièce en matière thermoplastique suivant l'une des revendications 1 à 4, consistant à former un insert (1) en matière thermoplastique, à réaliser sur l'insert un premier dépôt métallique par voie chimique directement en contact avec la surface de l'insert (1) puis au moins un deuxième dépôt métallique sur ledit premier dépôt métallique, de manière à former une couche de métallisation (2) ayant une épaisseur totale minimum de 15 micromètres, et à recouvrir l'insert métallisé d'une matière thermoplastique transparente ou translucide (3).

6. Procédé suivant la revendication 5, **caractérisé en ce que** la couche (2) de métallisation sur l'insert forme une couche d'épaisseur égale à 30 microns.

7. Procédé suivant la revendication 6, **caractérisé en ce que** le métal déposé au cours de l'étape de dépôt par voie chimique est du nickel, du cuivre ou du palladium.

8. Procédé suivant la revendication 7, **caractérisé en ce que** le métal déposé au cours de ladite au moins une étape de dépôt par voie électrolytique est du cuivre et du nickel.

9. Procédé suivant l'une des revendications 6 à 8, **caractérisé en ce que** le métal déposé au cours d'une étape facultative de dépôt électrolytique est un métal de finition choisi parmi l'or, l'argent, le chrome, le palladium, le bronze blanc.

## Patentansprüche

1. Plastikteil, welches aus einem Einsatz (1) besteht, der mit einer Metallisierungsschicht (2) umhüllt ist, welche auf ihrem Umfang von einem durchsichtigen oder durchscheinenden Kunststoffmaterial (3) überzogen ist, wobei die Metallisierungsschicht (2) aus einer ersten chemisch abgeschiedenen Schicht aus Metall besteht, die sich in direktem Kontakt mit der Oberfläche des Einsatzes (1) befindet, und mindestens aus einer zweiten elektrolytisch abgeschiedenen Schicht aus Metall besteht, die sich auf dieser ersten abgeschiedenen Schicht aus Metall befindet, und wobei die Metallisierungsschicht (2) eine Gesamtdicke von einem Minimum von 15 Mikrometer aufweist.

2. Plastikteil nach Anspruch 1, **dadurch gekennzeichnet, dass** die Metallisierungsschicht (2) eine Dicke von 30 Mikrometer besitzt.

3. Plastikteil nach einem der Ansprüche 1 und 2, **dadurch gekennzeichnet, dass** die Metallisierungsschicht aus Nickel und Kupfer besteht.

4. Plastikteil nach Anspruch 3, **dadurch gekennzeichnet, dass** die Dicke des Kupfers der Metallisierungsschicht mindestens der Hälfte der Dicke der Metallisierungsschicht entspricht.

5. Verfahren zur Herstellung eines Teils aus thermoplastischem Werkstoff nach einem der Ansprüche 1 bis 4, beruhend auf Bilden eines Einsatzes (1) aus thermoplastischem Werkstoff, auf Ausgestaltung einer ersten auf chemischen Wege abgeschiedenen Schicht aus Metall, die sich in direktem Kontakt mit der Oberfläche des Einsatzes (1) befindet, und dann mindestens einer zweiten elektrolytisch abgeschiedenen Schicht aus Metall, die sich auf dieser ersten abgeschiedenen Schicht aus Metall befindet, so dass eine Metallisierungsschicht (2) mit einer Gesamtdicke von einem Minimum von 15 Mikrometer gebildet wird, und auf Umhüllen des metallisierten Einsatzes mit einem durchsichtigen oder durchscheinenden thermoplastischen Werkstoff (3).

6. Verfahren nach Anspruch 5, **dadurch gekennzeichnet, dass** die Metallisierungsschicht (2) auf dem Einsatz eine Schicht mit einer Dicke von 30 Mikron bildet.

7. Verfahren nach Anspruch 6, **dadurch gekennzeichnet, dass** das abgeschiedene Metall im Verlauf der Stufe der Abscheidung auf chemischen Wege aus Nickel, Kupfer oder Palladium besteht.

8. Verfahren nach Anspruch 7, **dadurch gekennzeichnet, dass** das abgeschiedene Metall im Verlauf der wenigstens einen Stufe der Abscheidung auf elektrolytischem Wege aus Kupfer und Nickel besteht.

9. Verfahren nach einem der Ansprüche 6 bis 8, **dadurch gekennzeichnet, dass** das abgeschiedene Metall im Verlauf einer beliebigen Stufe der Abscheidung auf elektrolytischem Wege ein Metall zur Veredelung ist, welches aus den Metallen Gold, Silber, Chrom, Palladium, Weißbronze ausgewählt wird.

## Claims

1. A plastic part comprising an insert (1) with a metal coating (2) covered in turn by a transparent or translucent plastic (3), the metal coat (2) having a first chemical deposit of metal which is in direct in contact with the surface of the insert (1) and at least a second electrolytic deposit of metal which is on the said first metal deposit, the overall thickness of the metal coat (2) being 15 microns at the minimum.

2. A plastic part according to Claim 1, **characterised in that** the thickness of the metal coat (2) is 30 microns.

3. A plastic part according to one of the Claims 1 and 2, **characterised in that** the metal coat consists of nickel and copper.

4. A plastic part according to Claim 3, **characterised in that** the thickness of copper in the metal coat is equal to at least half the thickness of the metal coat.

5. Method of making a part in a thermoplastic material according to one of the Claims 1 to 4, consisting in forming a thermoplastic insert (1), depositing on the insert a first metal coat chemically in contact with the surface of the insert (1) and then depositing at least a second metal coat on the said first metal deposit, so as to form a metal coat (2) with a total minimum thickness of 15 microns, and covering the metallised insert with a transparent or translucent thermoplastic material (3).

6. Method according to Claim 5, **characterised in that** the metal coat (2) on the insert forms a coat with a thickness equal to 30 microns.

7. Method according to Claim 6, **characterised in that** the metal deposited during the chemical depositing stage is nickel, copper or palladium.

8. Method according to Claim 7, **characterised in that** the metal deposited during at least the said one depositing stage electrolytically is copper and nickel.

9. Method according to one of the Claims 6 to 8, **characterised in that** the metal deposited during an optional electrolytic depositing stage is a finishing metal chosen from among gold, silver, chromium, palladium, white bronze.
